# EUROPEAN PATENT SPECIFICATION

(11) **EP 4 411 167 B1**
(45) Date of publication and mention of the grant of the patent: **13.08.2025**
(21) Application number: 24154767.8
(22) Date of filing: 30.01.2024
(51) Int. Cl.: F16G 13/06

(54) **BICYCLE CHAIN**
FAHRRADKETTE
CHAÎNE DE BICYCLETTE

(30) Priority: 01.02.2023 JP 2023014271
(43) Date of publication of application: 07.08.2024
(73) Proprietor: Daido Kogyo Co., Ltd., Kaga-shi, Ishikawa 922-8686 (JP)
(72) Inventor: NAOE, Toshiya, Ishikawa, 922-8686 (JP); TANAKA, Kouta, Ishikawa, 922-8686 (JP); HIKOSO, Kazuma, Ishikawa, 922-8686 (JP); NAKAMURA, Genta, Ishikawa, 922-8686 (JP); KIKUCHI, Tatsuya, Ishikawa, 922-8686 (JP)
(74) Representative: Karakatsanis, Georgios

(56) References cited:
- DE-U1- 202009 009 857
- DE-U1- 29 617 840
- US-A- 3 359 815
- US-A- 5 322 482
- US-A- 5 346 006
- US-A1- 2010 236 900
- US-A1- 2018 223 985

## Description

### BACKGROUND OF THE INVENTION

### Field of the Invention

The present invention relates to a bicycle chain.

### Description of the Related Art

Conventionally, it has been known to form a slide-plating layer having high slidability with respect to a sliding member of a bicycle, and for example, it has been devised to form the slide-plating layer on an outer link plate of a chain as the sliding member (see JP 2015-092009 A).

Since the outer link plate of the bicycle chain slides on the side surface of the tooth of the sprocket at the time of shifting, it is possible to reduce the sliding resistance with respect to the side surface of the tooth of the sprocket by forming the slide-plating layer as in JP 2015-092009 A Other examples of prior art chains are shown in DE29617840U1 and US2018/223985A1.

On the other hand, it has also been required to reduce the sliding resistance with the side surface of the tooth of the sprocket by another method.

### SUMMARY OF THE INVENTION

The present invention in its one aspect provides a bicycle chain as specified in claims 1 to 7.

Further features of the present invention will become apparent from the following description of exemplary embodiments with reference to the attached drawings.

### BRIEF DESCRIPTION OF THE DRAWINGS

FIG. 1 is a schematic diagram showing a chain transmission device according to a first embodiment.
FIG. 2 is a perspective view showing a bicycle chain according to the first embodiment.
FIG. 3 is an exploded view of the bicycle chain.
FIG. 4A is a front view of an outer link plate according to the first embodiment.
FIG. 4B is a rear view of the outer link plate.
FIG. 4C is a left side view of the outer link plate.
FIG. 4D is a right side view of the outer link plate.
FIG. 4E is a plan view of the outer link plate.
FIG. 4F is a bottom view of the outer link plate.
FIG. 4G is a left perspective view of the outer link plate.
FIG. 4H is a right perspective view of the outer link plate.
FIG. 4I is a cross-sectional view taken along the line A-A of FIG. 4A.
FIG. 5A is a front view of the outer link plate according to the first embodiment.
FIG. 5B is a rear view of the outer link plate.
FIG. 5C is a left side view of the outer link plate.
FIG. 5D is a right side view of the outer link plate.
FIG. 5E is a plan view of the outer link plate.
FIG. 5F is a bottom view of the outer link plate.
FIG. 5G is a cross-sectional view taken along the line A-A of FIG. 5A.
FIG. 6 is a perspective view of the outer link plate according to the first embodiment.
FIG. 7A is a front view of an outer link plate according to a second embodiment.
FIG. 7B is a rear view of the outer link plate.
FIG. 7C is a left side view of the outer link plate.
FIG. 7D is a right side view of the outer link plate.
FIG. 7E is a plan view of the outer link plate.
FIG. 7F is a bottom view of the outer link plate.
FIG. 7G is a left perspective view of the outer link plate.
FIG. 7H is a right perspective view of the outer link plate.
FIG. 7I is a cross-sectional view taken along the line B-B of FIG. 7A.
FIG. 8 is a cross-sectional view of the outer link plate of FIGS. 7A to 7I.
FIG. 9A is a front view of the outer link plate according to the second embodiment in a state in which an imaginary line indicating an uneven region is removed.
FIG. 9B is a rear view of the outer link plate.
FIG. 9C is a left side view of the outer link plate.
FIG. 9D is a right side view of the outer link plate.
FIG. 9E is a plan view of the outer link plate.
FIG. 9F is a bottom view of the outer link plate.
FIG. 9G is a left perspective view of the outer link plate.
FIG. 9H is a right perspective view of the outer link plate.
FIG. 9I is a cross-sectional view taken along the line B-B of FIG. 9A.
FIG. 10 is a view showing an outer link plate according to a third embodiment.
FIG. 11 is a view showing an outer link plate according to a fourth embodiment.
FIG. 12 is a view showing an outer link plate according to a fifth embodiment.
FIG. 13 is a view showing an outer link plate according to a sixth embodiment.
FIG. 14 is a view showing an outer link plate according to a seventh embodiment.

### DESCRIPTION OF THE EMBODIMENTS

### First Embodiment

### Schematic Configuration of Chain Transmission Device

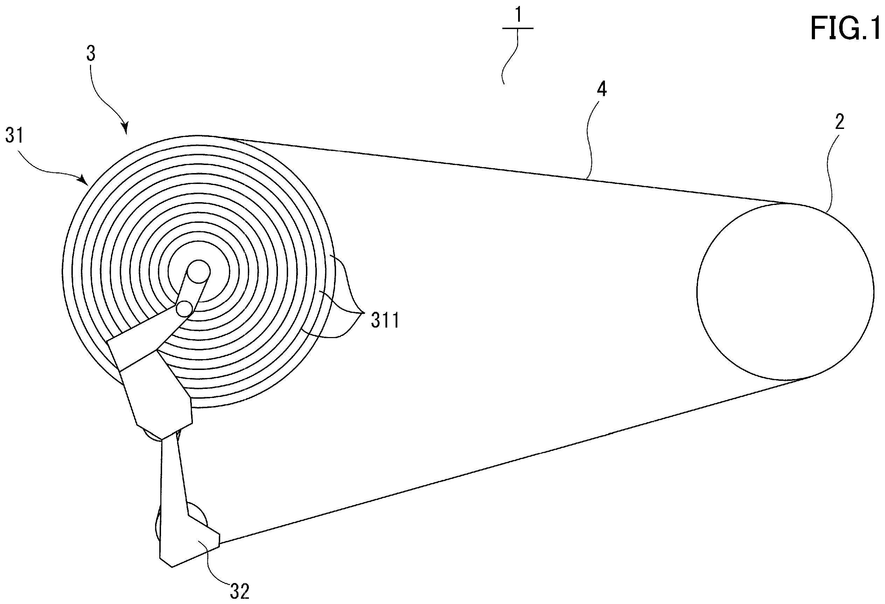

Hereinafter, embodiments of the present invention will be described with reference to the drawings. A bicycle chain transmission device 1 shown in FIG. 1 includes a front sprocket 2, an exterior rear multistage transmission 3, and a chain 4. The rear multistage transmission 3 includes a rear sprocket unit 31 and a rear derailleur 32, and the rear sprocket unit 31 is configured such that a plurality of rear sprockets 311 having different diameters disposed so as to decrease in diameter from the rear side (the hub side of the tire) toward the front side (the outside) in the axial direction rotate integrally. The rear derailleur 32 is movable in the lateral direction (axial direction) with respect to the driving direction of the chain 4.

The bicycle chain 4 is endlessly wound around the front sprocket 2 and the rear sprocket 311, so that the bicycle chain transmission device 1 transmits the driving force generated in the front sprocket 2 to the rear sprocket 311 via the bicycle chain 4.

In addition, the chain transmission device 1 shifts the speed of the bicycle by changing the chain 4 to the rear sprocket 311 having a different diameter using the rear derailleur 32. Specifically, a downshift is performed by changing the chain 4 from the small-diameter rear sprocket 311 to the large-diameter rear sprocket 311, and an upshift is performed by changing the chain 4 from the large-diameter rear sprocket 311 to the small-diameter rear sprocket 311.

The rear sprocket 311 is provided with a groove at a predetermined position on the circumference in a direction in which the chain 4 rises from the small-diameter sprocket 311 toward the large-diameter sprocket 311. The rear sprocket 311 is provided with a groove at a predetermined position different from the downshift groove in a direction in which the chain 4 falls from the large-diameter sprocket 311 toward the small-diameter sprocket 311. Therefore, both the upshift and downshift are performed only at predetermined positions corresponding to the upshift/downshift grooves on the sprocket 311.

### Configuration of Bicycle Chain

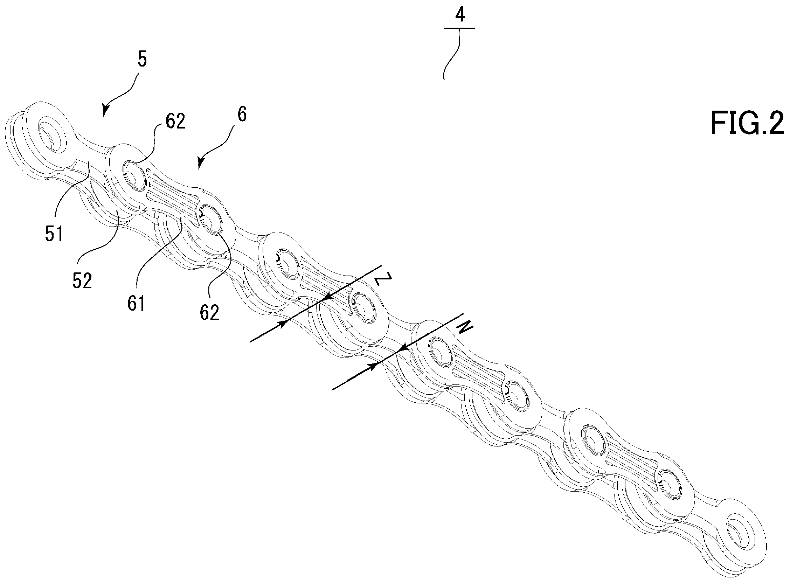

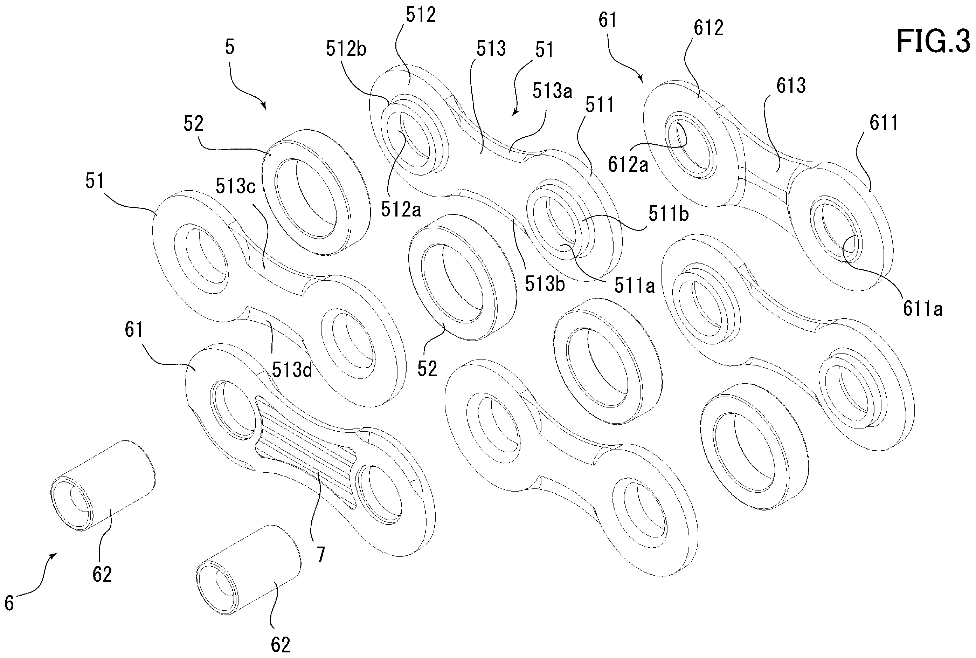

Next, the configuration of the bicycle chain 4 will be described. As shown in FIG. 2, the bicycle chain 4 is configured such that an inner link 5 and an outer link 6 are alternately connected by a chain pin 62. As shown in FIG. 3, the inner link 5 includes a pair of inner link plates 51 and 51 facing each other in the axial direction of the chain pin 62, and a roller 52. Each of the pair of inner link plates 51 and 51 includes a first inner link end 511 provided at one end of the inner link plate 51 in the longitudinal direction, a second inner link end 512 provided at an end opposite to the one end in the longitudinal direction, and an inner link intermediate portion 513 connecting the first inner link end 511 and the second inner link end 512.

Each of the first inner link end 511 and the second inner link end 512 has a substantially circular shape, a first fitting insertion hole 511a is formed at the first inner link end 511, and a second fitting insertion hole 512a is formed at the second inner link end 512. The first inner link end 511 and the second inner link end 512 are provided with sleeve portions 511b and 512b protruding in the axial direction on inner surfaces thereof (surfaces facing the other inner link plate).

The first sleeve 511b is a cylindrical portion whose inner periphery protrudes so as to form a part of the first fitting insertion hole 511a, and the second sleeve 512b is a cylindrical portion whose inner periphery protrudes so as to form a part of the second fitting insertion hole 512a. Further, the roller 52 is configured to be fitted to the first and second sleeves 511b and 512b, and when the protrusion amount of the first sleeve 511b and the second sleeve 512b is P and the thickness of the roller 52 in the axial direction is D, D>2P is satisfied. Thus, the end surfaces of the opposing sleeve portions do not slide during assembly of the chain 4.

The inner link intermediate portion 513 is formed so as to be recessed toward the pitch line connecting the centers of the first fitting insertion hole 511a and the second fitting insertion hole 512a in relation to the first inner link end 511 and the second inner link end 512. Therefore, the inner link plate 51 has a substantially 8 shape when viewed from the axial direction of the chain pin 62. In the inner link intermediate portion 513, an end edge forming an outer edge of the inner link plate 51 is C-chamfered. Specifically, upper and lower end edges 513a and 513b of the inner link plate 51 in the lateral direction are formed on the inner surface of the inner link intermediate portion 513 in a tapered shape so as to be thinner in the direction away from the pitch line in the lateral direction of the inner link plate 51. Similarly, upper and lower end edges 513c and 513d in the lateral direction are formed on the outer surface of the inner link intermediate portion 513 on the opposite side in the axial direction from the inner surface in a tapered shape so as to be thinner in the direction away from the pitch line in the lateral direction of the inner link plate 51.

The outer link 6 includes a pair of outer link plates 61 and 61 facing each other in the axial direction of the chain pin 62, and the chain pin 62. Each of the pair of outer link plates 61 includes a first outer link end 611 provided at one end in the longitudinal direction of the outer link plate 61, a second outer link end 612 provided at another end opposite to the one end in the longitudinal direction, and an outer link intermediate portion 613 connecting the first outer link end 611 and the second outer link end 612.

Each of the first outer link end 611 and the second outer link end 612 has a substantially circular shape, a first pin hole 611a is formed at the first outer link end 611, and a second pin hole 612a is formed at the second outer link end 612. In addition, the outer link intermediate portion 613 is formed so as to be recessed toward the pitch line connecting the centers of the first pin hole 611a and the second pin hole 612a in relation to the first outer link end 611 and the second outer link end 612. Therefore, the outer link plate 61 has a substantially 8 shape when viewed from the axial direction of the chain pin 62.

The chain pin 62 is configured to be press-fitted and fixed to the first pin hole 611a and the second pin hole 612a of the outer link plate 61. The chain pin 62 is configured to be loosely fitted by being fitted into the first fitting insertion hole 511a and the second fitting insertion hole 512a of the inner link plate 51. For example, in the example of FIG. 3, both ends of the chain pin 62 are press-fitted into the first pin holes 611a and 611a of the pair of outer link plates 61 and 61, and are fitted into the second fitting insertion holes 512a and 512a of the pair of inner link plates 51 and 51 between the pair of outer link plates 61 and 61. Both ends of the other chain pin 62 are press-fitted into the second pin holes 612a and 612a of the pair of outer link plates 61, and are fitted into the first fitting insertion holes 511a and 511a of the pair of inner link plates 51 and 51 between the pair of outer link plates 61 and 61. Thus, the outer link 6 and the inner link 5 are configured to be relatively bendable.

### Detailed Configuration of Outer Link Plate

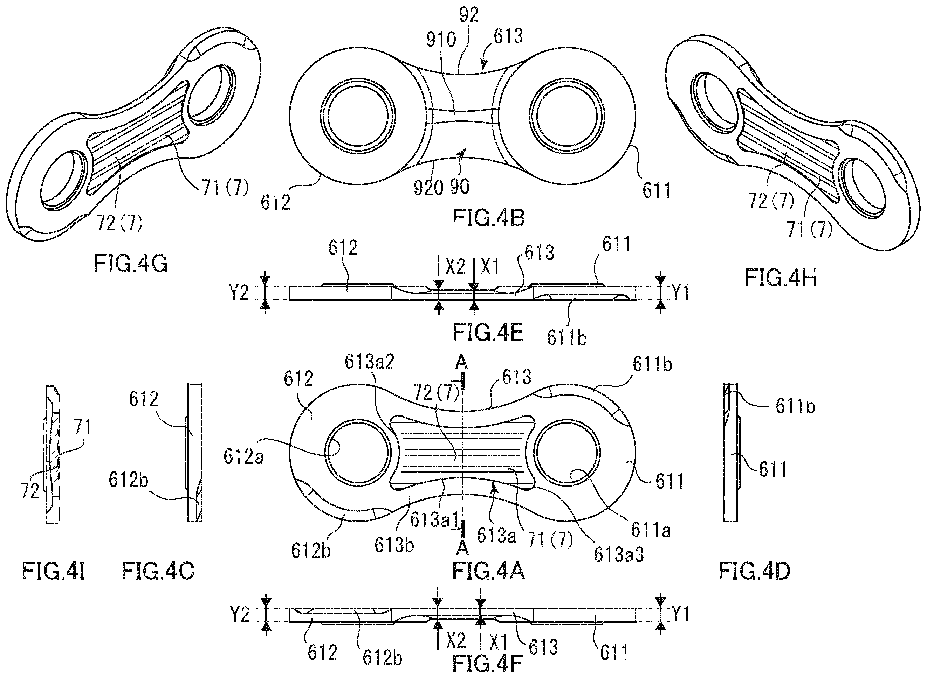

Next, a detailed configuration of the outer link plate 61 will be described with reference to FIGS. 4A to 4I. In the following description, at the time of assembling the chain, a side surface of the outer link plate 61 positioned on the axial outside of the chain pin 62 is referred to as an outer surface (see FIG. 4A), and a side surface opposite to the outer surface is referred to as an inner surface (see FIG. 4B).

The outer surface of the outer link plate 61 is a sliding region where the outer surface slides on the side surface of the tooth of the large-diameter rear sprocket 311 at the end of shifting in both the downshift (small-diameter rear sprocket → large-diameter rear sprocket) and the upshift (large-diameter rear sprocket → small-diameter rear sprocket). Therefore, in order to reduce resistance and noise during sliding, the outer link plate 61 of the present embodiment has an uneven pattern 7 formed on the outer surface as shown in FIGS. 4A, 4G, 4H, and 4I.

More specifically, the uneven pattern 7 is formed on the outer surface of the outer link intermediate portion 613 positioned between the first outer link end 611 and the second outer link end 612 in the longitudinal direction (pitch line direction) of the outer link plate 61 orthogonal to the axial direction of the chain pin 62, and the outer surface of the outer link intermediate portion 613 has an uneven region 613a in which the uneven pattern 7 is formed and a peripheral region 613b which surrounds the uneven region 613a.

In the uneven region 613a, a plurality of irregularities is continuously arranged in a predetermined pattern to form the uneven pattern 7, and in the present embodiment, a plurality of protrusion portions 71 and a plurality of groove portions 72 form the uneven pattern 7 having a waveform. Specifically, the protrusion portion 71 is a ridge with an arc-shaped cross section and extends in the longitudinal direction of the outer link plate 61, and the plurality of protrusion portions is arranged in the lateral direction of the outer link plate 61 with a predetermined pitch. Further, a space between the protrusion portions 71 parallel to the longitudinal direction is formed by the groove portion 72 continuously connected to the protrusion portions 71 by a curved surface or at substantially a right angle, and the protrusion portions 71 and the groove portions 72 are alternately arranged in the lateral direction to form the uneven pattern 7 having the waveform.

The uneven region 613a is defined by a pair of upper and lower constricted edges 613a1 extending along the constricted shape of the outer link intermediate portion 613 when viewed in FIG. 4A, a pair of left and right arc-shaped edges 613a2 extending along the contours of the first pin hole 611a and the second pin hole 612a, and four corner portions 613a3 connecting the constricted edge and the arc-shaped edge. In the figure, each corner portion 613a3 has a constricted shape of the outer link intermediate portion 613 and a shape protruding from the outer link intermediate portion 613 toward the first and second outer link ends 611 and 612 along the first and second pin holes 611a and 612a. The uneven region 613a may have a rectangular region shape in which the corner portion 613a3 does not protrude.

On the other hand, the peripheral region 613b is constituted by a plane having no uneven pattern, and this plane is a plane continuous with the outer surfaces of the first outer link end 611 and the second outer link end 612. The outer surfaces of the first outer link end 611 and the second outer link end 612 are flat surfaces in order to improve workability during pressing. For shifting, an upper end edge 611b in the lateral direction is chamfered on the outer surface of the first outer link end 611, and a lower end edge 612b in the lateral direction is chamfered on the outer surface of the second outer link end 612 (see FIGS. 4A, 4C, 4D, 4E, and 4F).

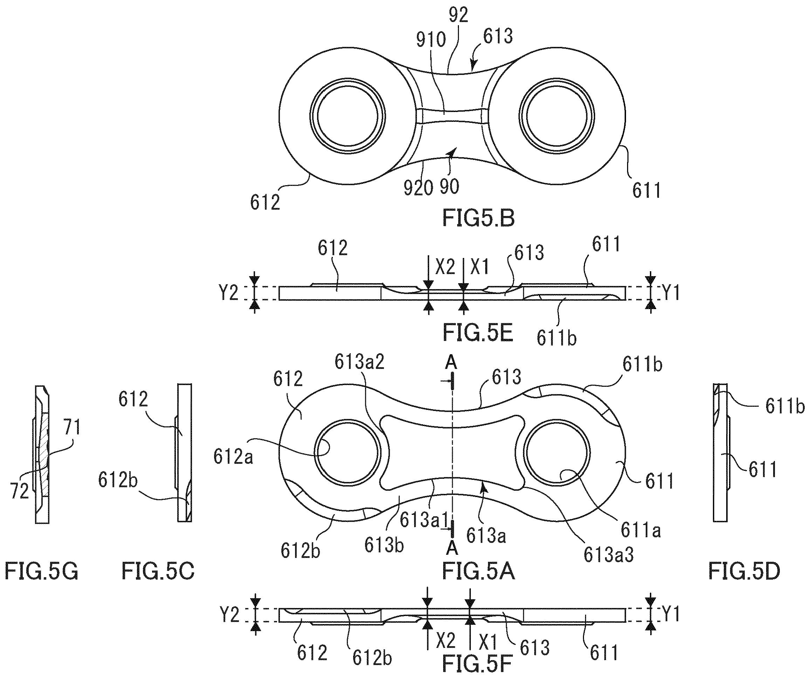

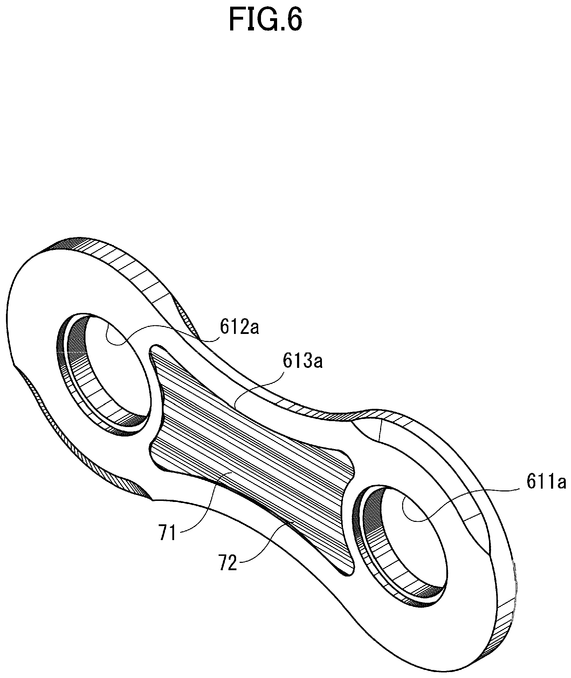

In FIGS. 2 to 4I described above, in order to make the shape of the uneven pattern 7 in the uneven region 613a easy to understand, the change in the curved surface of the surface of the uneven pattern 7 formed by the curved surface is indicated by a ridge line. On the other hand, FIGS. 5A to 5G are six surface views showing the outer link plate 61 only in outline. FIG. 6 is a perspective view of the outer link plate 61, in which a shade is indicated by a thin line so that the three-dimensional shape of the outer link plate 61 including the uneven pattern 7 can be seen. More specifically, the thin lines shown near the outer edge of the outer link plate 61, the pin holes 611a and 612a, and the uneven region 613a in FIG. 6 are all for specifying the shape of the three-dimensional surface.

As described above, since the uneven pattern 7 is formed on the outer surface in the outer link plate 61 of the present embodiment, the sliding area between the outer link plate and the side surface of the tooth of the sprocket 311 at the time of shifting is reduced, so that the friction coefficient can be reduced. Accordingly, it is possible to reduce the sliding resistance with respect to the side surface of the tooth of the sprocket and to reduce the noise at the time of shifting.

Next, the configuration of the inner surface of the outer link plate 61 will be described. As shown in FIGS. 4B, 4E, and 4F, a thin portion 90 recessed toward the outer surface side in the thickness direction than the first outer link end 611 and the second outer link end 612 is formed in the outer link intermediate portion 613 on the inner surface of the outer link plate 61.

The thin portion 90 is configured such that a center portion 910 positioned on a center side (pitch line side) of the outer link plate 61 is the thickest and an end edge 920 which is an outer edge of the outer link plate 61 is thinnest, and the center portion 910 and the end edge 920 are connected by a gentle curved surface. Therefore, as shown in FIGS. 4E and 4F, when the thickness of the outer link plate 61 at the end edge 920 is X1, the thickness of the outer link plate 61 at the center portion 910 is X2, the thickness of the outer link plate 61 at the first outer link end 611 is Y1, and the thickness of the outer link plate 61 at the second outer link end 612 is Y2, the relationship between these thicknesses is X1<X2<Y1=Y2.

More specifically, the thickness (for example, X1 and X2) of the outer link plate 61 in the thin portion 90 is 30% to 70% of the thickness (for example, Y1 and Y2) of the thickest portion of the outer link plate 61. For example, the thickness X1 of the thinnest portion of the outer link plate 61 can be set to 50% of the thicknesses Y1 and Y2 of the thickest portions of the outer link plate 61.

As described above, in the present embodiment, the thin portion 90 is formed on the inner surface of the outer link intermediate portion 613, and as shown in FIG. 2, the gap Z between the pair of outer link plates 61 and 61 constituting the outer link 6 is configured to be large. When the chain 4 is changed from the small-diameter sprocket 311 to the large-diameter sprocket 311 (at the time of triggering the shift), the teeth of the large-diameter sprocket 311 always enter the gap Z between the outer link plates 61 first. However, in the present embodiment, since the gap Z is large, the teeth of the large-diameter sprocket 311 can be smoothly inserted between the outer link plates 61 and 61 at the time of the downshift.

In addition, the teeth that first enter the gap Z between the outer link plates 61 at the time of the downshift are teeth arranged at positions corresponding to the above-described downshift grooves, and the teeth of the rear sprocket 311 are offset from the other adjacent teeth on the front side (outer side) in the axial direction and are formed to be thinner. Therefore, in combination with the wide gap Z, the teeth of the sprocket 311 can be smoothly inserted into the gap Z during the downshift speed change, and the speed change performance during the downshift can be improved.

On the other hand, at the time of upshift, the gear shift is triggered by deviation of the teeth of the large-diameter rear sprocket 311 from the gap N between the pair of inner link plates 51 and 51 of the inner link 5 formed narrower than the gap Z (see FIG. 2). Even in this case, as shown in FIG. 3, since the end edges 513c and 513d are chamfered on the outer surface of the inner link intermediate portion 513 in the chain 4 according to the present embodiment, the chain 4 is easily detached from the teeth of the large-diameter rear sprocket 311. As a result, it is possible to improve the shifting performance at the time of upshift.

### Second Embodiment

Next, a second embodiment will be described. The present embodiment is different from the first embodiment only in that an uneven pattern of an outer link plate is different. Therefore, in the following description, only differences from the first embodiment will be described, and description of other parts will be omitted.

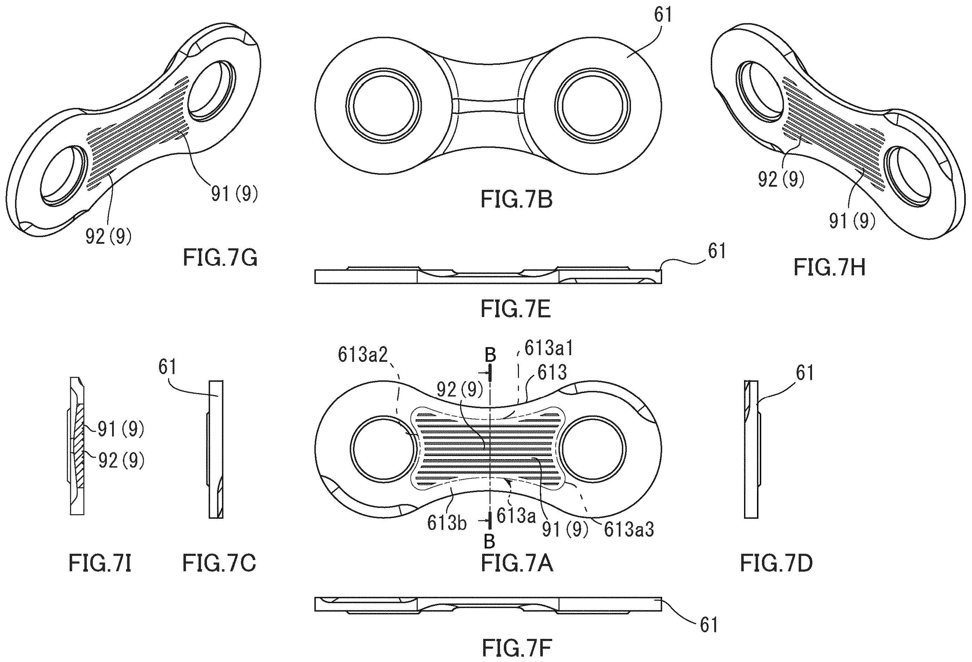

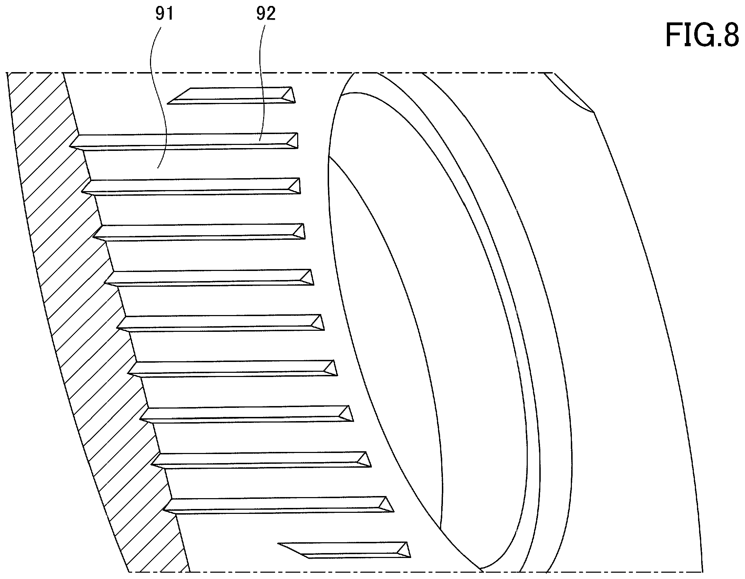

As shown in FIGS. 7A to 7I, the uneven pattern 9 according to the present embodiment is provided in the uneven region 613a of the outer surface of the outer link intermediate portion 613, and is formed by a plurality of V groove portions 92 and a plurality of protrusion portions 91. Specifically, as shown in FIGS. 7I and 8, the V groove portion 92 is a groove portion having a V-shaped cross section, and extends in the longitudinal direction of the outer link plate 61. The plurality of V groove portions 92 is arranged side by side in the lateral direction of the outer link plate 61 with a predetermined pitch, and a space between the V groove portions 92 is the protrusion portion 91. The cross-sectional shape of the groove portion 92 is not limited to the V shape, and may be a U shape.

The protrusion portion 91 is a convex portion protruding with respect to the V groove portion 92, and is constituted by a plane having the same height as the peripheral region 613b. The V groove portions 92 and the protrusion portions 91 are alternately arranged in the lateral direction to form the uneven pattern 9. That is, in the present embodiment, the uneven pattern 9 is formed by forming the plurality of V groove portions 92 extending in parallel in the longitudinal direction in the uneven region 613a of the outer surface of the outer link intermediate portion 613. As described above, in the present embodiment, the uneven pattern 9 can be provided only by forming the V groove on the outer surface of the outer link plate 61.

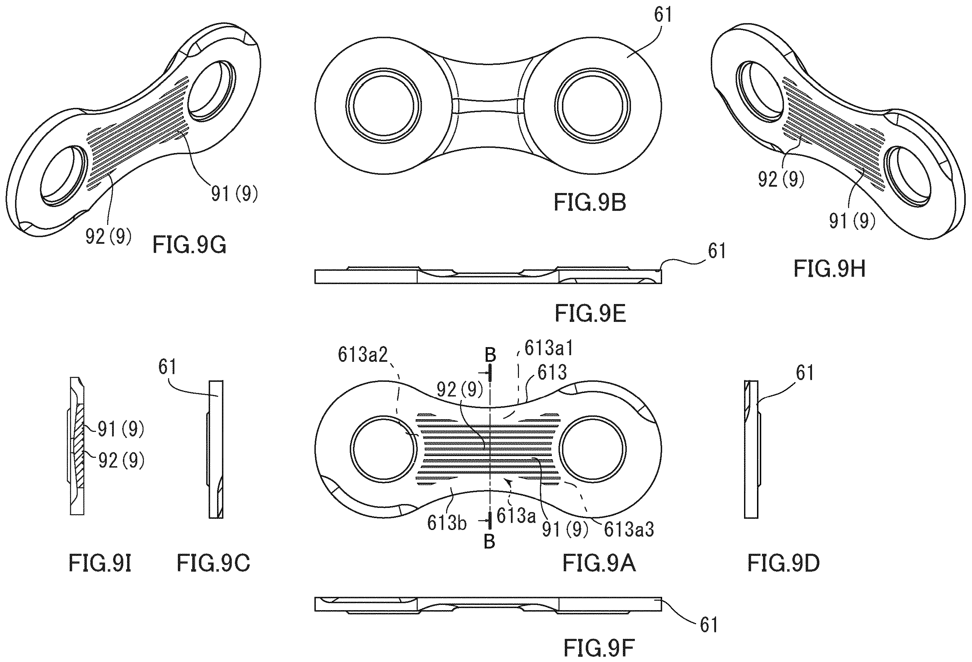

The uneven region 613a according to the present embodiment is defined by an imaginary line indicated by a two-dot chain line in FIG. 7A. Specifically, as in the first embodiment shown in FIG. 4A, the imaginary line is defined by the pair of upper and lower constricted edges 613a1, the pair of left and right arc-shaped edges 613a2, and four corner portions 613a3 connecting the constricted edge 613a1 and the arc-shaped edge 613a2. Each corner portion 613a3 has a protruding shape as in the first embodiment. The uneven region 613a may have a rectangular region shape in which no corner portion protrudes. FIGS. 9A to 9I show FIGS. 7A to 7I in a state in which the imaginary line indicating the uneven region 613a is erased and only the outline is indicated.

### Third Embodiment

Next, a third embodiment will be described. The present embodiment is different from the first embodiment only in that an uneven pattern of an outer link plate is different. Therefore, in the following description, only differences from the first embodiment will be described, and description of other parts will be omitted.

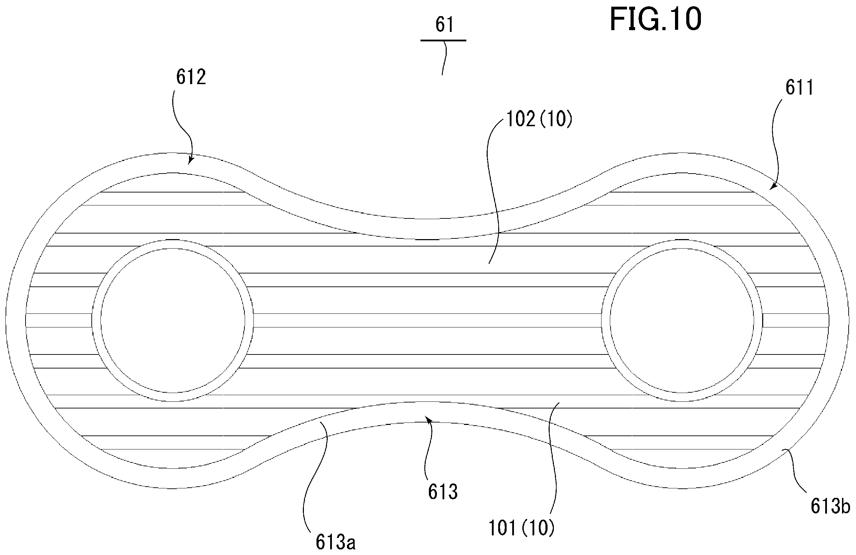

As shown in FIG. 10, in the uneven pattern 10 according to the present embodiment, the uneven pattern 10 is formed not only on the outer link intermediate portion 613 but also on substantially the entire outer surface of the outer link plate 61 from the first outer link end 611 to the second outer link end 612. More specifically, in the uneven pattern 10, an uneven pattern having a waveform is formed by a plurality of protrusion portions 101 and a plurality of groove portions 102.

The protrusion portion 101 has an arc-shaped cross section and extends from the first outer link end 611 to the second outer link end 612 via the outer link intermediate portion 613 in the longitudinal direction of the outer link plate 61. In addition, the plurality of protrusion portions 101 is arranged in the lateral direction of the outer link plate 61 with a predetermined pitch, and the parallel protrusion portions 101 form the groove portions 102 continuously connected to the protrusion portions 101 at a curved surface or substantially a right angle. The protrusion portions 101 and the groove portions 102 are alternately arranged in the lateral direction to form the uneven pattern 10 having the waveform.

Further, the peripheral region 613b is formed around the uneven region 613a where the uneven pattern 10 is formed, and the peripheral region 613b is constituted by a plane having no uneven pattern. In the present embodiment, the plane of the peripheral region 613b is configured to have the same height as the vertex of the protrusion portion 101 as in the first embodiment, but may be configured to be lower than the vertex of the protrusion portion 101.

In this manner, the sliding area with the side surface of the tooth of the rear sprocket 311 can be more effectively reduced by forming the uneven pattern 10 on substantially the entire outer surface of the outer link plate 61.

### Fourth Embodiment

Next, a fourth embodiment will be described. The present embodiment is different from the third embodiment only in that an uneven pattern of an outer link plate is different. Therefore, in the following description, only differences from the first embodiment will be described, and description of other parts will be omitted.

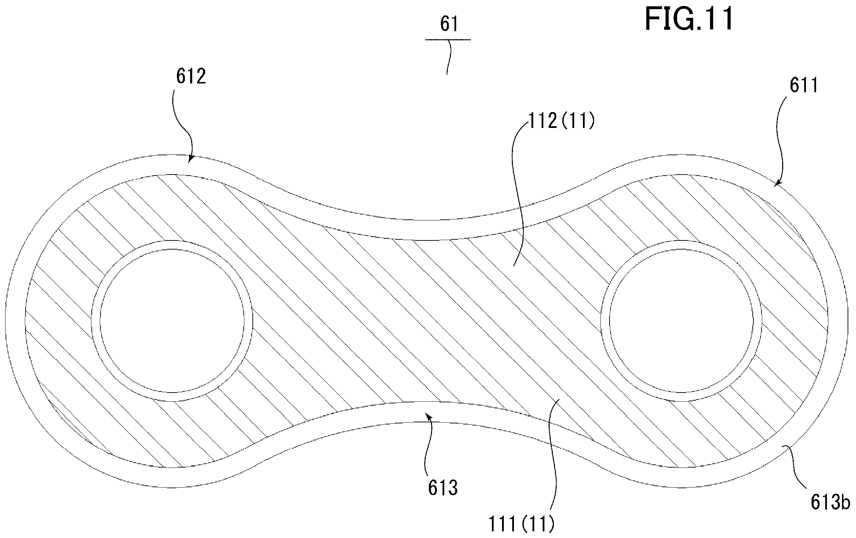

As shown in FIG. 11, in the uneven pattern 11 according to the present embodiment, the uneven pattern 11 is formed not only on the outer link intermediate portion 613 but also on substantially the entire outer surface of the outer link plate 61 from the first outer link end 611 to the second outer link end 612. More specifically, in the uneven pattern 11, an uneven pattern is formed by a plurality of protrusion portions 111 and a plurality of groove portions 112.

The protrusion portion 111 has an arc-shaped cross section and extends in the oblique direction intersecting the longitudinal direction of the outer link plate 61. The plurality of protrusion portions 111 extending in the oblique direction is arranged in the longitudinal direction of the outer link plate 61 with a predetermined pitch, and are provided from the first outer link end 611 to the second outer link end 612 via the outer link intermediate portion 613. In addition, a space between the protrusion portions 111 is formed by the groove portion 112 continuously connected to the adjacent protrusion portions 111 by a curved surface or at a substantially right angle. The protrusion portions 111 and the groove portions 112 are alternately arranged to form the uneven pattern 11. Although not shown, each of the protrusion portions 111 may extend in the oblique direction so as to cross the longitudinal direction of the outer link plate 61 at an angle different from each other.

### Fifth Embodiment

Next, a fifth embodiment will be described. The present embodiment is different from the fourth embodiment only in that an uneven pattern of an outer link plate is different. Therefore, in the following description, only differences from the first embodiment will be described, and description of other parts will be omitted.

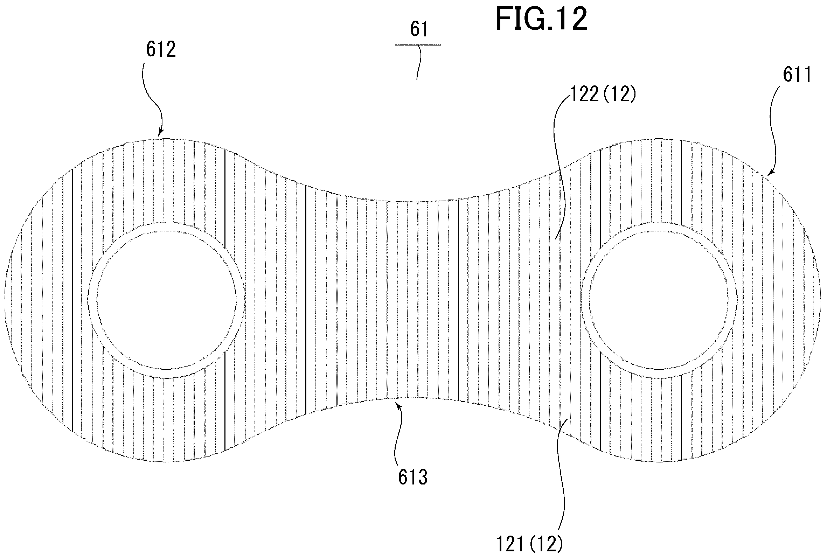

As shown in FIG. 12, in the uneven pattern 12 according to the present embodiment, the uneven pattern 10 is formed not only on the outer link intermediate portion 613 but also on substantially the entire outer surface of the outer link plate 61 from the first outer link end 611 to the second outer link end 612. More specifically, in the uneven pattern 12, an uneven pattern is formed by a plurality of protrusion portions 121 and a plurality of groove portions 122.

The protrusion portion 121 has an arc-shaped cross section and extends in the lateral direction of the outer link plate 61. The plurality of protrusion portions 121 extending in the lateral direction are arranged in the longitudinal direction of the outer link plate 61 with a predetermined pitch, and are provided from the first outer link end 611 to the second outer link end 612 via the outer link intermediate portion 613. In addition, the plurality of protrusion portions 121 form the groove portions 122 continuously connected to the adjacent protrusion portions 121 at a curved surface or a substantially right angle. The protrusion portions 121 and the groove portions 122 are alternately arranged to form the uneven pattern 12. In the present embodiment, the peripheral region 613b does not exist, and the plurality of protrusion portions 121 and groove portions 122 extend to the outer edge of the outer link plate 61.

### Sixth Embodiment

Next, a sixth embodiment will be described. The present embodiment is different from the fourth embodiment only in that an uneven pattern of an outer link plate is different. Therefore, in the following description, only differences from the first embodiment will be described, and description of other parts will be omitted.

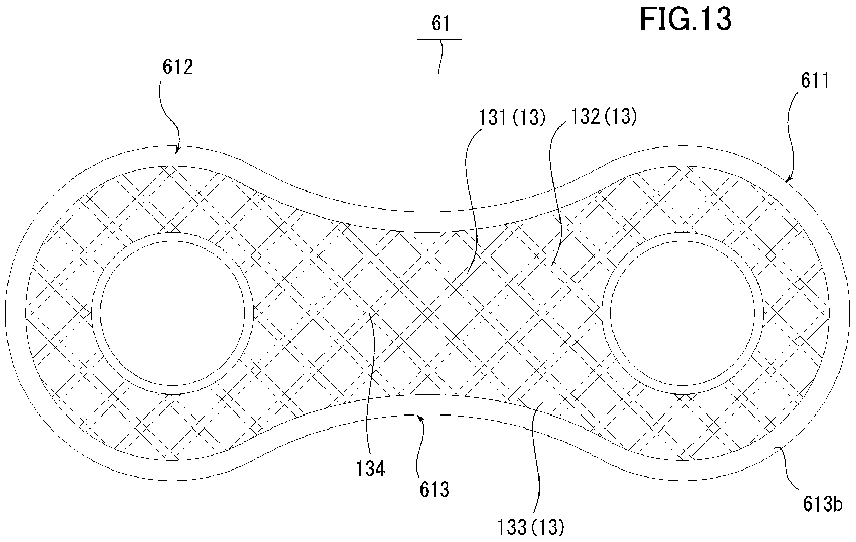

As shown in FIG. 13, in the uneven pattern 13 according to the present embodiment, the uneven pattern 13 is formed not only on the outer link intermediate portion 613 but also on substantially the entire outer surface of the outer link plate 61 from the first outer link end 611 to the second outer link end 612. More specifically, in the uneven pattern 13, an uneven pattern is formed by a plurality of first protrusion portions 131, a plurality of second protrusion portions 132, and a plurality of concave portions 133 between the first protrusion portions 131 and the second protrusion portions 132.

The first protrusion portion 131 has an arc-shaped cross section and extends in a first oblique direction inclined obliquely with respect to the longitudinal direction of the outer link plate 61. The second protrusion portion 132 has a substantially semicircular cross section and extends in a second oblique direction inclined at an angle different from the first oblique direction with respect to the longitudinal direction of the outer link plate 61. The plurality of first and second protrusion portions 131 and 132 are arranged in the longitudinal direction of the outer link plate 61 with a predetermined pitch, and are provided from the first outer link end 611 to the second outer link end 612 via the outer link intermediate portion 613.

Further, in the uneven pattern 13, an intersection point 134 formed by the first protrusion portion 131 and the second protrusion portion 132 intersecting with each other and orthogonal to each other, for example, serves as a vertex, and a region surrounded by the first protrusion portion 131 and the second protrusion portion 132 serves as the concave portion 133. As described above, the intersection point 134 between the first protrusion portion 131 and the second protrusion portion 132 is formed as the vertex protruding to the outermost side in the uneven pattern 13, so that the contact with the side surface of the tooth of the rear sprocket 311 can be made point contact, and the sliding area with the side surface of the tooth of the rear sprocket 311 can be effectively reduced.

### Seventh Embodiment

Next, a seventh embodiment will be described. The present embodiment is different from the fourth embodiment only in that an uneven pattern of an outer link plate is different. Therefore, in the following description, only differences from the first embodiment will be described, and description of other parts will be omitted.

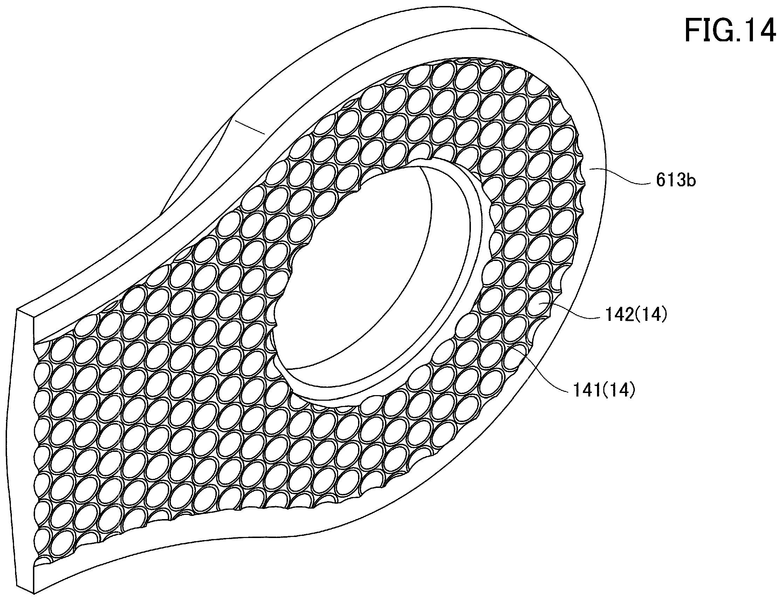

As shown in FIG. 14, in the uneven pattern 14 according to the present embodiment, the uneven pattern 13 is formed not only on the outer link intermediate portion 613 but also on substantially the entire outer surface of the outer link plate 61 from the first outer link end 611 to the second outer link end 612. More specifically, in the uneven pattern 14, an uneven pattern is formed by the plurality of dimples 142 and a plurality of convex portions 141.

In the present embodiment, the dimple 142 is a recess recessed in a circular shape, and is provided from the first outer link end 611 to the second outer link end 612 via the outer link intermediate portion 613 at a predetermined interval. In addition, a space between the plurality of dimples 142 is a convex portion 141 protruding to the outermost side in the uneven pattern 14. In the present embodiment, since the convex portion 141 makes point contact with the side surface of the tooth of the rear sprocket 311 at the time of shifting, the sliding area with the side surface of the tooth of the rear sprocket 311 can be effectively reduced. The dimple 142 may be a recess recessed in a substantially rectangular shape.

Furthermore, in the above-described embodiment, an example in which the transmission is provided only on the rear side has been described. However, the front sprocket may be provided in multiple stages, and the transmission may also be provided on the front side. In addition, power from an electric assist motor may be input to the front side. Further, the bicycle chain 4 may be a chain with a bush.

Further, the uneven pattern formed on the outer surface of the outer link plate 61 is not limited to the example described above, and for example, the uneven pattern may be formed by providing convex portions concentrically at a predetermined pitch on the outer surface of the outer link plate 61 or arranging a plurality of dot-shaped convex portions. Further, the uneven pattern may be formed on the entire outer surface of the outer link plate 61 or a part thereof. In addition, the inventions described in the above-described embodiments may be combined in any way.

While the present invention has been described with reference to exemplary embodiments, it is to be understood that the invention is not limited to the disclosed exemplary embodiments. The scope of the following claims is to be accorded the broadest interpretation so as to encompass all such modifications.

## Claims

1. A bicycle chain (4) comprising:
an inner link (5) which includes a pair of inner link plates (51); and
an outer link (6) which includes a pair of outer link plates (61) and a chain pin (62),
wherein the inner link (5) and the outer link (6) are bendably connected by the chain pin (62), **characterized in that**
the outer link plate (61) includes an inner side surface facing the inner link (5) in an axial direction of the chain pin (62) and an outer side surface opposite to the inner side surface in the axial direction of the chain pin (62), the outer side surface of the outer link plate (61) including a sliding region that slides on a side surface of a tooth of a sprocket (311), and
wherein an uneven pattern (7, 9, 10, 11, 12, 13, 14) in which a plurality of irregularities is continuously arranged in a predetermined pattern is provided in the sliding region of the outer link plate (61) for reducing a sliding resistance between the sliding region of the outer side surface of the outer link plate (61) and the side surface of the tooth of the sprocket (311).

2. The bicycle chain (4) according to claim 1,
wherein the plurality of irregularities includes a plurality of protrusion portions (71, 91, 101) extending in a longitudinal direction of the outer link plate (61) orthogonal to an axial direction of the chain pin (62) and groove portions (72, 92, 102) between the protrusion portions (71, 91, 101), and
wherein the uneven pattern (7, 9, 10) is formed by alternately arranging the protrusion portions (71, 91, 101) and the groove portions (72, 92, 102) in a lateral direction of the outer link plate (61) orthogonal to the longitudinal direction.

3. The bicycle chain according to claim 1,
wherein the plurality of irregularities includes a plurality of dimples (142) formed on the outer side surface of the outer link plate (61) and convex portions (141) between the dimples (142), and
wherein the uneven pattern (14) is formed by arranging the dimples (142) and the convex portions (141) in the predetermined pattern.

4. The bicycle chain according to claim 1,
wherein the plurality of irregularities includes a plurality of convex portions (134) formed on the outer side surface of the outer link plate (61) and in point contact with the side surface of the tooth of the sprocket (311) and concave portions (133) between the convex portions (134), and
wherein the uneven pattern (13) is formed by arranging the convex portions (133) and the concave portions (134) in the predetermined pattern.

5. The bicycle chain according to claim 1,
wherein the plurality of irregularities includes a plurality of first protrusion portions (131) extending in a first oblique direction inclined with respect to a longitudinal direction of the outer link plate (61) orthogonal to the axial direction of the chain pin (62), a plurality of second protrusion portions (132) extending in a second oblique direction inclined at an angle different from the first oblique direction with respect to the longitudinal direction, and concave portions (133) provided between the first protrusion portions (131) and the second protrusion portions (132), and
wherein the uneven pattern (13) is formed such that the first protrusion portions (131) and the second protrusion portions (132) cross each other.

6. The bicycle chain (4) according to any one of claims 1 to 5,
wherein the outer link plate (61) includes a pair of pin holes (611a, 612a) that are provided at one end and another end in the longitudinal direction orthogonal to the axial direction of the chain pin (62), and
wherein a thin portion is formed between the one end and the other end on the inner side surface of the outer link plate (61) opposite to the outer side surface in the axial direction, the thin portion being recessed toward the outer side surface side from the one end and the other end.

7. The bicycle chain (4) according to claim 6,
wherein the thin portion (90) has a thickness of 30% to 70% of a thickness of the thickest portion of the outer link plate (61).

## Patentansprüche

1. Fahrradkette (4), umfassend:
ein Innenglied (5), das ein Paar Innenlaschen (51) umfasst; und
ein Außenglied (6), das ein Paar Außenlaschen (61) und einen Kettenbolzen (62) umfasst,
wobei das Innenglied (5) und das Außenglied (6) durch den Kettenbolzen (62) biegbar verbunden sind, **dadurch gekennzeichnet, dass**
die Außenlasche (61) eine dem Innenglied (5) in axialer Richtung des Kettenbolzens (62) zugewandte Innenseite und eine der Innenseite in axialer Richtung des Kettenbolzens (62) gegenüberliegende Außenseite aufweist, wobei die Außenseite der Außenlasche (61) einen Gleitbereich aufweist, der auf der Seitenfläche eines Zahns eines Ritzels (311) gleitet, und
wobei eine ungleichmäßige Struktur (7, 9, 10, 11, 12, 13, 14), bei der eine Vielzahl von Unregelmäßigkeiten ununterbrochen in einer vorgegebenen Struktur angeordnet ist, im Gleitbereich der Außenlasche (61) vorgesehen ist, um den Gleitwiderstand zwischen dem Gleitbereich der Außenseite der Außenlasche (61) und der Seitenfläche des Zahns des Ritzels (311) zu verringern.

2. Fahrradkette (4) nach Anspruch 1,
wobei die Vielzahl von Unregelmäßigkeiten eine Vielzahl von Vorsprungsabschnitten (71, 91, 101), die sich in Längsrichtung der Außenlasche (61) orthogonal zu einer Axialrichtung des Kettenbolzens (62) erstrecken, sowie Nutabschnitte (72, 92, 102) zwischen den Vorsprungsabschnitten (71, 91, 101) umfasst, und
wobei die ungleichmäßige Struktur (7, 9, 10) durch abwechselnde Anordnung der Vorsprungsabschnitte (71, 91, 101) und Nutabschnitte (72, 92, 102) in lateraler Richtung der Außenlasche (61) orthogonal zur Längsrichtung ausgebildet ist.

3. Fahrradkette nach Anspruch 1,
wobei die Vielzahl von Unregelmäßigkeiten eine Vielzahl von Vertiefungen (142), die an der Außenseite der Außenlasche (61) ausgebildet sind, und konvexe Abschnitte (141) zwischen den Vertiefungen (142) umfasst und
wobei die ungleichmäßige Struktur (14) durch die Anordnung der Vertiefungen (142) und der konvexen Abschnitte (141) in der vorgegebenen Struktur ausgebildet ist.

4. Fahrradkette nach Anspruch 1,
wobei die Vielzahl von Unregelmäßigkeiten eine Vielzahl von konvexen Abschnitten (134), die an der Außenseite der Außenlasche (61) ausgebildet sind und in Punktkontakt mit der Seitenfläche des Zahns des Ritzels (311) stehen, sowie konkave Abschnitte (133) zwischen den konvexen Abschnitten (134) umfasst und
wobei die ungleichmäßige Struktur (13) durch die Anordnung der konvexen Abschnitte (133) und der konkaven Abschnitte (134) in der vorgegebenen Struktur ausgebildet ist.

5. Fahrradkette nach Anspruch 1,
wobei die Vielzahl von Unregelmäßigkeiten eine Vielzahl von ersten Vorsprungsabschnitten (131), die sich in einer ersten schrägen Richtung erstrecken, die zur Längsrichtung der Außenlasche (61) senkrecht zur Axialrichtung des Kettenbolzens (62) geneigt ist, eine Vielzahl von zweiten Vorsprungsabschnitten (132), die sich in einer zweiten schrägen Richtung erstrecken, die in einem anderen Winkel als die erste schräge Richtung zur Längsrichtung geneigt ist, und konkave Abschnitte (133) zwischen den ersten Vorsprungsabschnitten (131) und den zweiten Vorsprungsabschnitten (132) umfasst und
wobei die ungleichmäßige Struktur (13) so ausgebildet ist, dass die ersten Vorsprungsabschnitte (131) und die zweiten Vorsprungsabschnitte (132) einander kreuzen.

6. Fahrradkette (4) nach einem der Ansprüche 1 bis 5,
wobei die Außenlasche (61) ein Paar Bolzenlöcher (611a, 612a) aufweist, die an einem und einem anderen Ende in Längsrichtung senkrecht zur Axialrichtung des Kettenbolzens (62) angeordnet sind und
wobei zwischen dem einen und dem anderen Ende an der der Axialrichtung gegenüberliegenden Innenseite der Außenlasche (61) ein dünner Abschnitt ausgebildet ist, der von dem einen und dem anderen Ende zur Außenseite hin vertieft ist.

7. Fahrradkette (4) nach Anspruch 6,
wobei ein dünner Abschnitt (90) eine Dicke von 30 % bis 70 % einer Dicke des dicksten Abschnitts der Außenlasche (61) aufweist.

## Revendications

1. Chaîne de bicyclette (4) comprenant :
un maillon intérieur (5) incluant une paire de plaques de maillon intérieur (51) ; et
un maillon extérieur (6) incluant une paire de plaques de maillon extérieur (61) et une broche de chaîne (62),
dans laquelle le maillon intérieur (5) et le maillon extérieur (6) sont reliés de façon courbable par la broche de chaîne (62), **caractérisée en ce que**
la plaque de maillon extérieur (61) inclut une surface latérale intérieure tournée vers le maillon intérieur (5) dans une direction axiale de la broche de chaîne (62) et une surface latérale extérieure opposée à la surface latérale intérieure dans la direction axiale de la broche de chaîne (62), la surface latérale extérieure de la plaque de maillon extérieur (61) incluant une région de glissement glissant sur une surface latérale d'une dent d'un pignon (311), et
dans laquelle un motif irrégulier (7, 9, 10, 11, 12, 13, 14) dans lequel une pluralité d'irrégularités sont agencées continuellement dans un motif prédéterminé est prévu dans la région de glissement de la plaque de maillon extérieur (61) pour réduire la résistance au glissement entre la région de glissement de la surface latérale extérieure de la plaque de maillon extérieur (61) et la surface latérale de la dent du pignon (311).

2. Chaîne de bicyclette (4) selon la revendication 1,
dans laquelle la pluralité d'irrégularités incluent une pluralité de parties en saillie (71, 91, 101) s'étendant
dans une direction longitudinale de la plaque de maillon extérieur (61) orthogonale à une direction axiale de la broche de chaîne (62) et des parties de rainure (72, 92, 102) entre les parties en saillie (71, 91, 101), et
dans laquelle le motif irrégulier (7, 9, 10) est formé par agencement alterné des parties en saillie (71, 91, 101) et des parties de rainure (72, 92, 102) dans une direction latérale de la plaque de maillon extérieur (61) orthogonale à la direction longitudinale.

3. Chaîne de bicyclette selon la revendication 1,
dans laquelle la pluralité d'irrégularités incluent une pluralité de creux (142) formés sur la surface latérale extérieure de la plaque de maillon extérieur (61) et des parties convexes (141) entre les creux (142), et
dans laquelle le motif irrégulier (14) est formé par agencement des creux (142) et des parties convexes (141) selon le motif prédéterminé.

4. Chaîne de bicyclette selon la revendication 1,
dans laquelle la pluralité d'irrégularités incluent une pluralité de parties convexes (134) formées sur la surface latérale extérieure de la plaque de maillon extérieur (61) et en contact ponctuel avec la surface latérale de la dent du pignon (311) et des parties concaves (133) entre les parties convexes (134), et
dans laquelle le motif irrégulier (13) est formé par agencement des parties convexes (133) et des parties concaves (134) selon la motif prédéterminé.

5. Chaîne de bicyclette selon la revendication 1,
dans laquelle la pluralité d'irrégularités incluent une pluralité de premières parties en saillie (131) s'étendant dans une première direction oblique inclinée par rapport à une direction longitudinale de la plaque de maillon extérieur (61) orthogonale à la direction axiale de la broche de chaîne (62), une pluralité de deuxièmes parties en saillie (132) s'étendant dans une deuxième direction oblique inclinée selon un angle différent de la deuxième direction oblique par rapport à la direction longitudinale, et des parties concaves (133) disposées entre les premières parties en saillie (131) et les deuxièmes parties en saillie (132), et
dans laquelle le motif irrégulier (13) est formé de telle façon que les premières parties en saillie (131) et les deuxièmes parties en saillie (132) se croisent entre elles.

6. Chaîne de bicyclette (4) selon l'une quelconque des revendications 1 à 5,
dans laquelle la plaque de maillon extérieur (61) inclut une paire de trous de broche (611a, 612a) disposés à une extrémité et à une autre extrémité dans la direction longitudinale orthogonale à la direction axiale de la broche de chaîne (62), et
dans laquelle une partie fine est formée entre ladite une extrémité et l'autre extrémité sur la surface latérale intérieure de la plaque de maillon extérieur (61) opposée à la surface latérale extérieure dans la direction axiale, la partie fine étant renfoncée vers la surface latérale extérieure à partir de ladite une extrémité et de l'autre extrémité.

7. Chaîne de bicyclette (4) selon la revendication 6,
dans laquelle la partie fine (90) présente une épaisseur comprise entre 30 % et 70 % d'une épaisseur de la partie la plus épaisse de la plaque de maillon extérieur (61).
